(19) Europäisches Patentamt

European Patent Office

Office européen des brevets

(11) **EP 4 764 675 A1**

(12) **DEMANDE DE BREVET EUROPEEN**

(43) Date de publication:
**24.06.2026 Bulletin 2026/26**

(21) Numéro de dépôt: **25224854.7**

(22) Date de dépôt: **18.12.2025**

(51) Classification Internationale des Brevets (IPC):
**G02F 1/015** (2006.01)     **G02F 1/31** (2006.01)
**H01S 5/18** (2021.01)

(52) Classification Coopérative des Brevets (CPC):
**G02F 1/0151; G02F 1/31**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **19.12.2024 FR 2414732**

(71) Demandeurs:
• **Commissariat à l'Energie Atomique et aux
Energies
Alternatives
75015 Paris (FR)**
• **Institut Polytechnique de Grenoble
38000 Grenoble (FR)**
• **Université Grenoble Alpes
38400 Saint-Martin-d'Hères (FR)**
• **Centre National de la Recherche Scientifique
75016 Paris (FR)**

(72) Inventeurs:
• **NAOUI, Ayoub
38054 GRENOBLE CEDEX 09 (FR)**
• **REIG, Bruno
38054 GRENOBLE CEDEX 09 (FR)**
• **PERRET, Etienne
26000 VALENCE (FR)**
• **PODEVIN, Florence
38330 ST PIERRE DE CHARTREUSE (FR)**
• **CHARLET, Ismaël
38054 GRENOBLE CEDEX 09 (FR)**
• **GUERBER, Sylvain
38054 GRENOBLE CEDEX 09 (FR)**

(74) Mandataire: **Cabinet Beaumont
4, Place Robert Schuman
B.P. 1529
38025 Grenoble Cedex 1 (FR)**

(54) **COMMUTATEUR A BASE D'UN MATERIAU A CHANGEMENT DE PHASE**

(57)     La présente description concerne un commutateur (200) à base d'un matériau à changement de phase, comprenant :
- une région (107) en ledit matériau à changement de phase reliant des première (101A) et deuxième (101B) électrodes de conduction du commutateur ; et
- un réseau de couplage (201) d'un signal laser d'activation du commutateur, situé en vis-à-vis d'une face de la région (107) en ledit matériau à changement de phase.

**EP 4 764 675 A1**

Fig. 2A

**Description**

Domaine technique

La présente description concerne de façon générale les dispositifs électroniques. La présente description concerne plus particulièrement les commutateurs à base d'un matériau à changement de phase, capable d'alterner entre une phase cristalline, électriquement conductrice, et une phase amorphe, électriquement isolante.

Technique antérieure

Diverses applications tirent profit de commutateurs, ou interrupteurs, à base d'un matériau à changement de phase pour permettre ou empêcher une circulation d'un courant électrique dans un circuit. De tels commutateurs peuvent notamment être mis en œuvre dans des applications de communication radiofréquence, par exemple pour commuter une antenne entre des modes d'émission et de réception, activer un filtre correspondant à une bande de fréquences, etc.

Les commutateurs à base d'un matériau à changement de phase existants présentent toutefois divers inconvénients.

Résumé de l'invention

Il serait souhaitable de pallier tout ou partie des inconvénients des commutateurs à base d'un matériau à changement de phase existants.

Pour cela, un mode de réalisation prévoit un commutateur à base d'un matériau à changement de phase, comprenant :

- une région en ledit matériau à changement de phase reliant des première et deuxième électrodes de conduction du commutateur ; et
- un réseau de couplage d'un signal laser d'activation du commutateur, situé en vis-à-vis d'une face de la région en ledit matériau à changement de phase et séparé de la région en ledit matériau à changement de phase par une distance comprise dans une plage allant de 100 à 300 nm,

dans lequel le réseau de couplage comprend, à l'aplomb de la région en ledit matériau à changement de phase, une alternance de premières régions en un premier matériau présentant un premier indice optique et de deuxièmes régions en un deuxième matériau présentant un deuxième indice optique strictement inférieur au premier indice optique.

Selon un mode de réalisation, le réseau de couplage est configuré pour irradier une puissance optique constante le long d'une direction de propagation du signal laser d'activation du commutateur.

Selon un mode de réalisation, les premières régions sont réparties à pas constant et présentent une largeur décroissante le long de la direction de propagation du signal laser d'activation du commutateur.

Selon un mode de réalisation, le réseau de couplage est configuré pour irradier une puissance optique décroissante le long d'une direction de propagation du signal laser d'activation du commutateur, les premières régions étant réparties à pas constant et présentant une largeur constante.

Selon un mode de réalisation, le réseau de couplage est situé dans le prolongement d'un guide d'ondes, le guide d'ondes comprenant une région centrale en ledit premier matériau entourée d'une région périphérique en ledit deuxième matériau.

Selon un mode de réalisation, le premier matériau est le nitrure de silicium et le deuxième matériau est l'oxyde de silicium.

Selon un mode de réalisation, une partie de la région centrale du guide d'ondes présente :

- une forme fuselée se rétrécissant au voisinage de la région en ledit matériau à changement de phase ; ou
- une forme évasée s'élargissant au voisinage de la région en ledit matériau à changement de phase.

Selon un mode de réalisation, le commutateur comprend en outre un substrat de support, le réseau de couplage étant interposé entre le substrat de support et la région en ledit matériau à changement de phase.

Selon un mode de réalisation, le commutateur comprend en outre une couche réfléchissante interposée entre le substrat de support et le réseau de couplage.

Selon un mode de réalisation, la couche réfléchissante est en silicium ou en nitrure de silicium.

Selon un mode de réalisation, le réseau de couplage est séparé de la couche en ledit matériau à changement de phase par une distance supérieure à 100 nm.

Selon un mode de réalisation, la région en ledit matériau à changement de phase présente une largeur comprise dans une plage allant de 1 à 100 μm, de préférence de 10 à 100 μm, plus préférentiellement de 30 à 100 μm.

Selon un mode de réalisation, les première et deuxième électrodes de conduction font partie d'un élément d'antenne d'une cellule de réseau transmetteur ou de réseau réflecteur.

Selon un mode de réalisation, ledit matériau à changement de phase est :

- un matériau chalcogénure, de préférence le tellurure de germanium, le tellurure d'antimoine ou le germanium-antimoine-tellure ; ou
- le dioxyde de vanadium.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1A, la figure 1B et la figure 1C sont des vues schématiques et partielles, respectivement de dessus, en coupe selon le plan BB de la figure 1A et en coupe selon le plan CC de la figure 1A, d'un exemple de commutateur à base d'un matériau à changement de phase ;

la figure 2A et la figure 2B sont des vues schématiques et partielles, respectivement de dessus et en coupe selon le plan BB de la figure 2A, d'un commutateur à base d'un matériau à changement de phase selon un mode de réalisation ;

la figure 3 est une vue de dessus, schématique et partielle, d'une variante du commutateur de la figure 2A ;

la figure 4A et la figure 4B sont des vues schématiques et partielles, respectivement de dessus et en coupe selon le plan BB de la figure 4A, d'un commutateur à base d'un matériau à changement de phase selon un mode de réalisation ;

la figure 5 est une vue en coupe, schématique et partielle, d'un réseau de couplage selon un mode de réalisation ; et

la figure 6 est une vue en coupe, schématique et partielle, d'un réseau de couplage selon un mode de réalisation.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les circuits de commande des commutateurs à base d'un matériau à changement de phase et les applications dans lesquelles peuvent être prévus de tels commutateurs n'ont pas été détaillés, les modes de réalisation et variantes décrits étant compatibles avec les circuits de commande des commutateurs à base d'un matériau à changement de phase usuels et avec les applications usuelles mettant en œuvre des commutateurs à base d'un matériau à changement de phase.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % ou à 10° près, de préférence à 5 % ou à 5° près.

Dans la description qui suit, les qualificatifs « isolant » et « conducteur » signifient respectivement, sauf précision contraire, électriquement isolant et électriquement conducteur.

Sauf précision contraire, l'expression « en contact avec » signifie « en contact mécanique avec ».

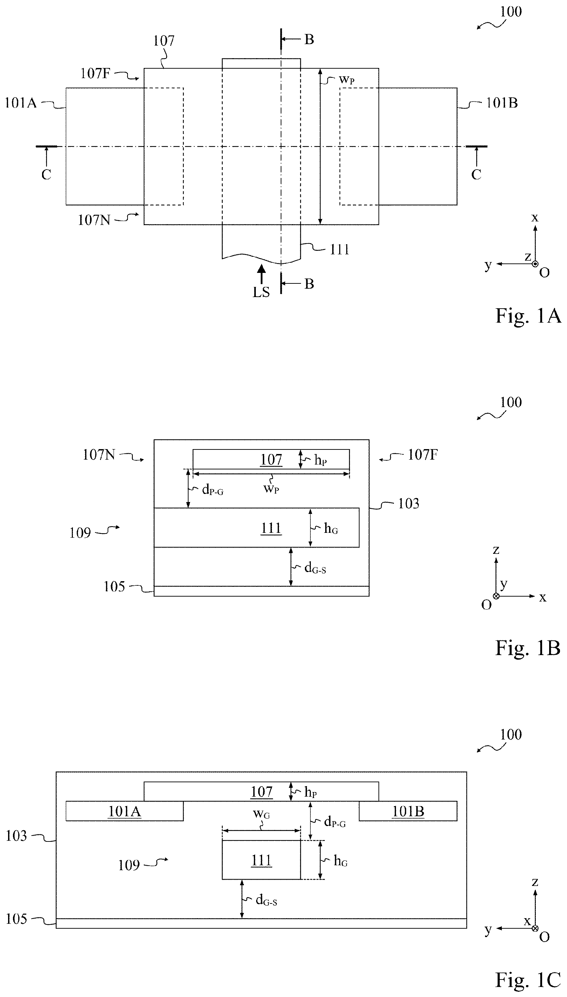

La figure 1A, la figure 1B et la figure 1C sont des vues schématiques et partielles, respectivement de dessus, en coupe selon le plan BB de la figure 1A et en coupe selon le plan CC de la figure 1A, d'un exemple de commutateur 100 à base d'un matériau à changement de phase. Dans l'exemple illustré, le plan BB est un plan vertical orthogonal à une direction de conduction du commutateur 100 et le plan CC est un plan vertical parallèle à la direction de conduction du commutateur 100.

Sur les figures 1A à 1C, la direction de conduction du commutateur 100 est parallèle à un axe Oy, le plan BB est parallèle à un plan vertical Oxz, orthogonal à l'axe Oy, et le plan CC est parallèle à un plan vertical Oyz, orthogonal à un axe Ox.

Dans l'exemple représenté, le commutateur 100 comprend des électrodes de conduction 101A et 101B. Les électrodes de conduction 101A et 101B du commutateur 100 sont par exemple destinées à être connectées à un circuit de communication radiofréquence, non détaillé sur les figures. Les électrodes de conduction 101A et 101B sont en un matériau conducteur, par exemple en un métal tel que le cuivre ou l'aluminium ou en un alliage métallique. Par ailleurs, les électrodes de conduction 101A et 101B peuvent présenter une structure monocouche ou multicouche.

Dans l'exemple illustré, les électrodes de conduction 101A et 101B du commutateur 100 sont situées dans une couche isolante 103, par exemple en oxyde de silicium, revêtant un substrat de support 105. À titre d'exemple, le substrat de support 105 est une plaquette ou un morceau de plaquette en un matériau semiconducteur, par exemple le silicium. Les électrodes de conduction 101A et 101B du commutateur 100 font par exemple partie d'un élément d'antenne d'une cellule de réseau transmetteur (« transmitarray », en anglais) ou réflecteur (« reflectarray », en anglais).

Dans l'exemple représenté, le commutateur 100 comprend en outre une région 107 en un matériau à changement de phase reliant les électrodes de conduction 101A et 101B. La région 107 en matériau à changement de phase revêt, dans l'exemple illustré, la face supérieure d'une partie de la couche isolante 103 s'étendant latéralement entre les électrodes 101A et 101B. Dans l'exemple représenté, la région 107 en matériau à changement de phase se prolonge sur et en contact avec une partie de la face supérieure de chaque électrode de conduction 101A, 101B. Dans l'exemple illustré, la région 107 en matériau à changement de phase présente, en vue de dessus, une forme sensiblement rectangulaire de largeur $w_P$. La largeur $w_P$ correspond, dans cet exemple, à la dimension latérale de la région 107 mesurée le long de l'axe Ox. La largeur $w_P$ de la région 107 en matériau à changement de phase est par exemple comprise dans une plage allant de 1 à 100 $\mu$m, par exemple de 10 à 100 $\mu$m, par exemple de 30 à 100 $\mu$m. À titre d'exemple, la région 107 en matériau à changement de phase présente une épaisseur $h_P$, mesurée le long de l'axe vertical Oz, de l'ordre de 100 nm.

À titre d'exemple, la région 107 en matériau à changement de phase du commutateur 100 est en un matériau dit « chalcogénure », c'est-à-dire un matériau ou un alliage comprenant au moins un élément chalcogène, par exemple un matériau de la famille du tellurure de germanium (GeTe), du tellurure d'antimoine (SbTe) ou du germanium-antimoine-tellure (GeSbTe, communément désigné par l'acronyme « GST »). À titre de variante, la région 107 est en dioxyde de vanadium ($VO_2$).

De manière générale, les matériaux à changement de phase sont des matériaux capables d'alterner, sous l'effet d'une variation de température, entre une phase cristalline et une phase amorphe, la phase amorphe présentant une résistance électrique supérieure à celle de la phase cristalline. Dans le cas du commutateur 100, ce phénomène est exploité pour obtenir un état bloqué, empêchant la circulation d'un courant entre les électrodes de conduction 101A et 101B, lorsque le matériau de la région 107 située entre les électrodes de conduction 101A et 101B est dans la phase amorphe, et un état passant, permettant la circulation du courant entre les électrodes de conduction 101A et 101B, lorsque le matériau de la région 107 est dans la phase cristalline.

Dans l'exemple représenté, le commutateur 100 comprend en outre un guide d'ondes 109, par exemple un guide d'ondes optiques, situé en vis-à-vis de la région 107 en matériau à changement de phase et s'étendant latéralement le long d'une direction principale sensiblement orthogonale à la direction de conduction du commutateur 100 (le long de la direction Ox, dans l'exemple représenté). Le guide d'ondes 109 comporte par exemple une première extrémité située en vis-à-vis d'une face supérieure de la région 107 en matériau à changement de phase et une deuxième extrémité, opposée à la première extrémité, destinée à être illuminée par une source laser LS, par exemple une diode laser ou un laser pulsé. La source laser LS est par exemple destinée à émettre un rayonnement constituant un signal optique de commande du commutateur 100. Le rayonnement laser LS émis par la source se propage dans le guide d'ondes 109 sous la forme d'une onde optique. À titre d'exemple, le rayonnement émis par la source laser LS présente une polarisation transverse magnétique (TM) ou une polarisation transverse électrique (TE). Par ailleurs, le rayonnement émis par la source laser LS présente par exemple une longueur d'onde centrale $\lambda_0$ égale à environ 915 nm. La longueur d'onde centrale $\lambda_0$ de la source laser LS équivaut à la longueur d'onde pour laquelle la puissance optique émise par la source laser LS est maximale. À titre d'exemple, la longueur d'onde centrale $\lambda_0$ de la source laser LS est choisie de sorte qu'elle soit compatible avec la photonique intégrée et que le matériau à changement de phase de la région 107 soit absorbant à cette longueur d'onde.

Dans l'exemple illustré, le guide d'ondes 109 comprend une région centrale 111, ou âme, entourée d'une région périphérique isolante, ou gaine, formée, dans cet exemple, par une partie de la couche isolante 103. Dans l'exemple illustré, la région centrale 111 du guide d'ondes 109 s'étend parallèlement à l'axe Ox. La région centrale 111 et la région périphérique du guide d'ondes 109 sont en des matériaux choisis de sorte à obtenir un contraste d'indices de réfraction permettant de confiner et guider un mode optique d'intérêt émis par la source laser LS. Le matériau de la région centrale

111 du guide d'ondes 109 présente par exemple un indice de réfraction $n_E$, ou indice optique, strictement supérieur à un indice de réfraction $n_O$ de la région périphérique. Dans le cas où la région périphérique est en dioxyde de silicium, la région centrale 111 du guide d'ondes 109 est par exemple en nitrure de silicium.

Le plan CC de la figure 1A est sensiblement orthogonal à une direction de propagation du rayonnement laser dans le guide d'ondes 109. La direction de propagation du rayonnement laser dans le guide d'ondes 109 est, dans l'exemple illustré, parallèle à l'axe Ox. Dans l'exemple représenté, la région périphérique du guide d'ondes 109 revêt les faces de la région centrale 111 parallèles à la direction de propagation du rayonnement laser (les faces latérales, inférieure et supérieure de la région centrale 111 du guide d'ondes 109 parallèles à l'axe Ox, en figures 1A à 1C). La région périphérique est plus précisément en contact avec les faces latérales, inférieure et supérieure de la région centrale 111. Dans cet exemple, une partie de la région périphérique du guide d'ondes 109 s'étend verticalement, le long de l'axe vertical Oz orthogonal aux axes horizontaux Ox et Oy, depuis une face de la région centrale 111 située en regard de la région 107 en matériau à changement de phase (la face supérieure de la région centrale 111 du guide d'ondes 109, dans l'orientation des figures 1B et 1C) jusqu'à une face de la région 107 en matériau à changement de phase située du côté des électrodes de conduction 101A et 101B (la face inférieure de la région 107 en matériau à changement de phase, dans l'orientation des figures 1B et 1C).

Dans l'exemple représenté, la région centrale 111 présente, en vue en coupe selon le plan CC orthogonal à la direction de propagation du rayonnement laser dans le guide d'ondes 109, une section de forme sensiblement rectangulaire. À titre d'exemple, la région centrale 111 présente, en vue en coupe selon le plan CC, une largeur $w_G$ (le long de l'axe Oy) égale à environ 2 $\mu$m et une hauteur $h_G$ (le long de l'axe Oz) égale à environ 315 nm. Par ailleurs, la région centrale 111 du guide d'ondes 109 est séparée de la région 107 en matériau à changement de phase par une distance $d_{P-G}$. Dans cet exemple, la distance $d_{P-G}$ équivaut à une épaisseur de la partie de la région périphérique interposée entre la région centrale 111 du guide d'ondes 109 et la région 107 en matériau à changement de phase. À titre d'exemple, la distance $d_{P-G}$ est inférieure ou égale à 100 nm. Dans l'exemple illustré, la région centrale 111 du guide d'ondes 109 est par ailleurs séparée de la face supérieure du substrat de support 105 par une distance $d_{G-S}$. Dans cet exemple, la distance $d_{G-S}$ équivaut à une épaisseur de la partie de la région périphérique interposée entre la face inférieure de la région centrale 111 du guide d'ondes 109 et la face supérieure du substrat de support 105. À titre d'exemple, la distance $d_{G-S}$ est comprise entre une ou plusieurs centaines de nanomètres et un ou plusieurs micromètres, par exemple égale à environ 1,5 $\mu$m.

Le guide d'ondes 109 est par exemple de type monomode, c'est-à-dire qu'il est adapté à confiner et guider un seul mode optique pour chaque type de polarisation. Le guide d'ondes 109 est par exemple plus précisément adapté à confiner et guider un seul mode optique choisi parmi un mode transverse électrique d'ordre zéro (TE0), parallèle à l'axe Oy, et un mode transverse magnétique d'ordre zéro (TM0), parallèle à l'axe Oz. Du fait que les modes TE0 et TM0 sont orthogonaux, ils ne peuvent pas se coupler mutuellement dans le guide d'ondes 109. Le choix du mode confiné et guidé par le guide d'ondes 109, entre le mode TE0 et le mode TM0, est déterminé par la polarisation de la source laser LS. Ainsi, dans un cas où la source laser LS émet un rayonnement présentant une polarisation transverse électrique TE, le guide d'ondes 109 est adapté à confiner et guider le mode transverse électrique d'ordre zéro TE0 uniquement.

Du côté de son extrémité destinée à être illuminée par la source laser LS, le guide d'ondes 109 comprend par exemple un élément de couplage d'entrée, aussi appelé surface d'entrée du guide d'ondes 109. Du côté de son extrémité située en vis-à-vis de la région 107 en matériau à changement de phase, le guide d'ondes 109 peut en outre comprendre un élément de couplage de sortie, aussi appelé surface de sortie du guide d'ondes 109. L'élément de couplage d'entrée peut présenter une structure, par exemple un réseau de diffraction présentant une structure de Bragg ou toute autre structure de couplage, permettant de capter le rayonnement émis par la source laser LS et de propager ce rayonnement jusqu'à la surface de sortie.

Par ailleurs, la surface de sortie du guide d'ondes 109 peut présenter une structure permettant de réémettre le rayonnement propagé depuis la surface d'entrée vers la région 107 en matériau à changement de phase. Dans l'exemple représenté, l'élément de couplage de sortie est constitué par la partie du guide d'ondes 109 située à l'aplomb de la région 107 en matériau à changement de phase.

De manière générale, les surfaces d'entrée et de sortie du guide d'ondes 109 permettent respectivement, dans l'exemple représenté, de recevoir et de transmettre un rayonnement, ou onde optique, selon une direction orthogonale à la direction de propagation du rayonnement, ou de l'onde optique, à l'intérieur du guide d'ondes 109, par exemple une direction parallèle à l'axe Oz. À titre de variante, au moins une surface parmi les surfaces d'entrée et de sortie du guide d'ondes 109, par exemple la surface d'entrée, peut présenter une structure permettant respectivement de recevoir ou de transmettre un rayonnement, ou onde optique, selon une direction parallèle à la direction de propagation du rayonnement, ou de l'onde optique, à l'intérieur du guide d'ondes 109 (parallèle à l'axe Ox, dans cet exemple).

Pour faire basculer le commutateur 100 de l'état bloqué à l'état passant, la région 107 est chauffée au moyen de la source laser LS, par couplage évanescent de l'onde propagée par le guide d'ondes 109, à une température T1 et pendant une durée d1. La température T1 et la durée d1 sont choisies de sorte à provoquer un changement de phase du matériau de la région 107 depuis la phase amorphe vers la phase cristalline. À titre d'exemple, la température T1 est supérieure à une température de cristallisation et inférieure à une température de fusion du matériau à changement de phase et la durée d1 est comprise entre 100 ns et 5 $\mu$s.

À l'inverse, pour faire basculer le commutateur 100 de l'état passant à l'état bloqué, la région 107 est chauffée au moyen de la source laser LS, par couplage évanescent de l'onde propagée par le guide d'ondes 109, à une température T2, supérieure à la température T1, et pendant une durée d2, inférieure à la durée d1. La température T2 et la durée d2 sont choisies de sorte à provoquer un changement de phase du matériau de la région 107 depuis la phase cristalline vers la phase amorphe. À titre d'exemple, la température T2 est supérieure à la température de fusion du matériau à changement de phase et la durée d2 est comprise dans une plage allant de 10 ns à 500 ns.

Un inconvénient du commutateur 100 tient au fait que l'onde optique se propageant dans le guide d'ondes 109 n'est pas absorbée de façon homogène dans la région 107 en matériau à changement de phase le long de la direction de propagation de l'onde optique dans le guide d'ondes 109 (le long de l'axe Ox, dans cet exemple). Dans l'exemple du commutateur 100, l'onde optique est majoritairement absorbée par une première partie 107N de la région 107 en matériau à changement de phase. La partie 107N est la plus proche de la source laser LS. L'absorption de l'onde optique est plus faible dans une deuxième partie 107F de la région 107 en matériau à changement de phase, opposée à la première partie 107N, plus éloignée de la source laser LS que la partie 107N. L'absorption optique de l'onde par la région 107 en matériau à changement de phase suit plus précisément une exponentielle décroissante depuis la partie 107N de la région 107 jusqu'à la partie 107F.

Ainsi, lors d'une phase d'activation du commutateur 100, la puissance optique absorbée par la deuxième partie 107F de la région 107 peut s'avérer insuffisante pour provoquer un changement de phase du matériau dans la partie 107F. Dans le cas d'une commutation de l'état passant à l'état bloqué, cela peut empêcher la deuxième partie 107F de la région 107 de changer de phase depuis la phase cristalline vers la phase amorphe, autorisant ainsi, de façon indésirable, le passage d'un courant de fuite entre les électrodes de conduction 101A et 101B du commutateur 100. Ce phénomène est d'autant plus susceptible de se produire que la largeur $w_P$ de la région 107 est importante.

Les inventeurs se sont aperçus que le phénomène provient du fait que le mode transverse électrique TE du signal laser d'activation du commutateur 100 confiné et guidé par le guide d'ondes 109 est fortement absorbé par le matériau à changement de phase de la région 107, conduisant ainsi à un échauffement de la partie 107N bien supérieur à celui observé dans la partie 107F. Pour pallier ce problème, la géométrie du guide d'ondes 109 pourrait être modifiée pour confiner et guider uniquement le mode transverse magnétique TM. Toutefois, le mode transverse magnétique TM est plus fortement absorbé par le matériau à changement de phase de la région 107 que le mode transverse électrique TE, ce qui conduirait à amplifier le phénomène. À titre d'exemple, le mode transverse magnétique TM présente des pertes, liées à l'absorption par le matériau à changement de phase de la région 107, de l'ordre de 2 500 dB.cm$^{-1}$, contre environ 500 dB.cm$^{-1}$ pour le mode transverse électrique TE.

Plus généralement, tant en mode transverse électrique TE qu'en mode transverse magnétique TM, la puissance optique absorbée suit une loi de type exponentielle décroissante pour cette configuration de guide, tandis que la loi d'absorption optique est constante. Toutefois, il serait préférable que la puissance absorbée suive une loi constante, ce qui pourrait être assuré par exemple par une loi d'absorption optique linéaire croissante, pour permettre de modifier l'état du matériau à changement de phase de la région 107. Cela permettrait en particulier de compenser le fait qu'il reste de moins en moins de puissance optique dans le guide au fur et à mesure que la puissance optique est absorbée.

Par ailleurs, des commutateurs à base d'un matériau à changement de phase à actionnement optique dit « direct » ont été proposés. Dans ces commutateurs, la région en matériau à changement de phase est par exemple irradiée par une source laser focalisée sur ladite région, les commutateurs étant par exemple dépourvus de guide d'ondes entre la source laser et la région en matériau à changement de phase.

Un tel commutateur est décrit dans l'article de A. Crunteanu et al. intitulé « Optical Switching of GeTe Phase Change Materials for High-Frequency Applications » et publié en 2017 suite à la conférence « IEEE MTT-S International Microwave Workshop Series on Advanced Materials and Processes for RF and THz Applications (IMWS-AMP) ». Dans cet article, une source laser à base de fluorure de krypton (KrF) émet un rayonnement présentant une longueur d'onde égale à environ 248 nm, par exemple sous forme d'impulsions, pour provoquer des transitions d'une région en matériau à changement de phase d'un commutateur entre les phases amorphe et cristalline. Une impulsion présentant une fluence de l'ordre de 90 mJ.cm$^{-2}$ est par exemple utilisée pour obtenir une transition depuis la phase amorphe vers la phase cristalline. En outre, une autre impulsion présentant une fluence de l'ordre de 185 mJ.cm$^{-2}$ est par exemple utilisée pour obtenir une transition depuis la phase cristalline vers la phase amorphe.

Les commutateurs à base d'un matériau à changement de phase à actionnement optique direct présentent toutefois des inconvénients. Ces commutateurs sont notamment incompatibles avec des structures de composant encapsulé. Par ailleurs, chaque commutateur requiert l'utilisation d'une source laser dédiée. Cela empêche ou complexifie grandement la réalisation de composants électroniques intégrés comprenant plusieurs commutateurs commandables individuellement.

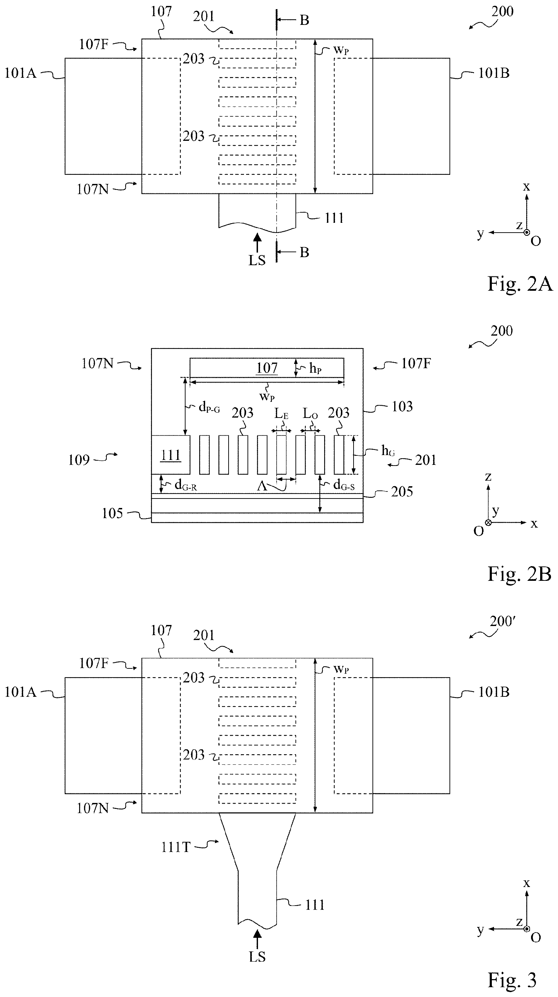

La figure 2A et la figure 2B sont des vues schématiques et partielles, respectivement de dessus et en coupe selon le plan BB de la figure 2A, d'un commutateur 200 à base d'un matériau à changement de phase selon un mode de réalisation.

Le commutateur 200 des figures 2A et 2B comprend des éléments communs avec le commutateur 100 des figures 1A à 1C. Ces éléments communs ne seront pas détaillés à nouveau ci-après. Le commutateur 200 des figures 2A et 2B diffère du commutateur 100 des figures 1A à 1C en ce que la surface de sortie du guide d'ondes 109 du commutateur 200 comprend un réseau de couplage 201, par exemple un réseau de couplage de Bragg.

Dans l'exemple représenté, le réseau de couplage 201 est formé à l'aplomb de la région 107 en matériau à changement de phase. Le réseau de couplage 201 comporte une pluralité de régions 203 en un matériau présentant un indice de réfraction $n_E$ strictement supérieur à un indice de réfraction $n_O$ de la couche isolante 103. Les régions 203 sont séparées latéralement les unes des autres par des parties de la couche isolante 103. Le signal de commande optique provenant de la source laser LS traverse ainsi, le long de sa direction de propagation, une alternance de milieux d'indices optiques différents. À titre d'exemple, chaque région 203 du réseau de couplage 201 est en le même matériau que la région centrale 111 du guide d'ondes 109. Cela facilite la réalisation du commutateur 200, les régions 111 et 203 étant par exemple formées par gravure d'une même couche.

Chaque région 203 présente par exemple, en vue en coupe selon un plan orthogonal à la direction de propagation du rayonnement laser dans le guide d'ondes 109, une section de forme sensiblement rectangulaire, par exemple une section identique, aux dispersions de fabrication près, à celle de la région centrale 111 du guide d'ondes 109. Dans l'exemple représenté, chaque région 203 présente une largeur $L_E$. La largeur $L_E$ correspond, dans cet exemple, à la dimension latérale de la région 203 mesurée le long de l'axe horizontal Ox. En outre, dans l'exemple représenté, chaque partie de la couche isolante 103 interposée latéralement entre deux régions 203 voisines présente une largeur $L_O$. La largeur $L_O$ correspond, dans cet exemple, à la dimension latérale de la partie de la couche isolante 103 mesurée le long de l'axe horizontal Ox.

Dans l'exemple illustré, les régions 203 du réseau de couplage 201 sont réparties de manière sensiblement uniforme, à pas constant, le long de la direction horizontale Ox. En outre, les régions 203 présentent des dimensions identiques, aux dispersions de fabrication près, et les parties de la couche isolante 103 interposées latéralement entre les régions 203 présentent des dimensions identiques, aux dispersions de fabrication près. Dans cet exemple, les régions 203 et les parties de la couche isolante 103 interposées latéralement entre les régions 203 forment une structure périodique de période Λ. Dans l'exemple illustré, la période Λ du réseau de couplage 201 correspond à la somme des largeurs $L_E$ et $L_O$.

La période Λ est choisie, en fonction de la longueur d'onde centrale $\lambda_0$ du rayonnement propagé par le guide d'ondes 109 et d'un indice optique effectif $n_{eff}$ résultant de l'alternance d'indices optiques $n_E$ et $n_O$ le long de la direction de propagation, de sorte à vérifier la condition de Bragg du premier ordre définie par la relation suivante :

[Math 1]

$$\Lambda = \frac{\lambda_0}{n_{eff}}$$

Dans le cas où la longueur d'onde centrale $\lambda_0$ est égale à environ 915 nm, la période Λ du réseau de couplage 201 est par exemple comprise entre 600 et 760 nm, par exemple égale à environ 680 nm.

L'indice optique effectif $n_{eff}$ est défini par la relation suivante :

[Math 2]

$$n_{eff} = F. n_E - (1 - F). n_O$$

Dans la relation ci-dessus, la lettre F désigne le facteur de remplissage du réseau de couplage 201. Le facteur de remplissage F est défini par la relation suivante :

[Math 3]

$$F = F_0 - \alpha x$$

Dans la relation ci-dessus, $\alpha$ désigne un facteur de fuite du réseau de couplage 201, x désigne la largeur du

commutateur 200 et $F_0$ désigne le facteur de remplissage initial, au début du réseau de couplage. Dans l'exemple représenté, la largeur x est par exemple égale à la largeur $w_P$ de la région 107 en matériau à changement de phase. À titre d'exemple, la largeur x est égale à environ 20 $\mu$m.

Le facteur de remplissage F du réseau de couplage 201 permet ainsi de contrôler le facteur de fuite $\alpha$. À titre d'exemple, le facteur de remplissage F est compris dans une plage allant de 0,5 à 0,9.

Dans l'exemple représenté, la largeur $L_E$ des régions 203 est égale au facteur de remplissage F multiplié par la période $\Lambda$ du réseau de couplage 201 ($L_E$ = F.$\Lambda$) et la largeur $L_O$ des parties de la couche 103 interposées latéralement entre les régions 203 est égale à 1-F multiplié par la période $\Lambda$ du réseau de couplage 201 ($L_O$ = (1-F).$\Lambda$). Dans un cas où le facteur de remplissage F est égal à environ 0,5 et où la période $\Lambda$ est égale à environ 680 nm, la largeur $L_E$ est égale à environ 340 nm et la largeur $L_O$ est égale à environ 340 nm.

Dans l'exemple illustré, une puissance optique P est guidée dans le réseau de couplage 201. La puissance optique P vérifie la relation suivante, dans laquelle $P_0$ désigne la puissance optique fournie par la source laser LS c'est-à-dire sensiblement la puissance optique présente en entrée du réseau de couplage 201 :

[Math 4]

$$P = P_0 e^{-2\alpha x}$$

Par ailleurs, la puissance $P_{rad}$ rayonnée par le réseau de couplage 201 est définie par la relation suivante :

[Math 5]

$$P_{rad} = -\frac{dP}{dx} = 2\alpha P_0 e^{-2\alpha x}$$

La distance $d_{G-S}$ séparant le substrat de support 105 de la région centrale 111 du guide d'ondes 109 présente par exemple, dans le cas du commutateur 200, une valeur sensiblement égale à celle choisie dans le cas du commutateur 100. À titre d'exemple, la distance $d_{G-S}$ est, dans le cas du commutateur 200, comprise entre une ou plusieurs centaines de nanomètres et un ou plusieurs micromètres, par exemple égale à environ 1,5 $\mu$m.

Dans l'exemple représenté, le commutateur 200 comprend en outre une couche réfléchissante 205, ou couche miroir, interposée entre le substrat de support 105 et le réseau de couplage 201. La couche réfléchissante 205 permet de renvoyer, en direction de la région 107 en matériau à changement de phase, la puissance optique rayonnée vers le substrat de support 105. À titre d'exemple, la couche réfléchissante 205 est en silicium ou en nitrure de silicium.

Dans l'exemple illustré, le réseau de couplage 201 est séparé de la couche réfléchissante 205 par une distance $d_{G-R}$. À titre d'exemple, la distance $d_{G-R}$ est comprise dans une plage allant de 100 à 700 nm.

La distance $d_{P-G}$ séparant la région 107 en matériau à changement de phase de la région centrale 111 du guide d'ondes 109 présente, dans le cas du commutateur 200, une valeur supérieure à celle choisie dans le cas du commutateur 100. Dans le cas du commutateur 200, la distance $d_{P-G}$ est par exemple comprise dans une plage allant de 100 à 300 nm, alors que la distance $d_{P-G}$ est par exemple comprise dans une plage allant de 0 à 100 nm dans le cas du commutateur 100.

À la différence du commutateur 100, dans lequel la puissance optique du signal de commande provenant de la source laser LS est transférée depuis le guide d'ondes 109 vers la région 107 en matériau à changement de phase par couplage évanescent, la structure du commutateur 200 permet de transférer la puissance optique depuis le réseau de couplage 201 vers la région 107 par irradiation directe. Cela permet avantageusement, par rapport au commutateur 100, d'éviter la forte absorption de l'onde optique au voisinage de la partie 107N de la région 107 en matériau à changement de phase proche de la source laser LS et de mieux répartir l'absorption le long de l'axe Ox. Cela permet en outre de prévoir une distance $d_{P-G}$ plus importante, ce qui facilite la réalisation du commutateur 200.

La figure 3 est une vue de dessus, schématique et partielle, d'une variante 200' du commutateur 200 de la figure 2A.

Dans l'exemple illustré, la région centrale 111 du guide d'ondes 109 comporte, au voisinage de la région 107 en matériau à changement de phase, une portion 111T présentant une forme évasée. Dans ce cas, la portion 111T présente une largeur croissante le long de l'axe Ox et permet de répartir l'énergie lumineuse sous le matériau à changement de phase à faire commuter. Cela permet avantageusement de faire commuter une plus grande zone de matériau à changement de phase, donc d'obtenir un commutateur plus performant présentant une capacité à l'état bloqué $C_{off}$ plus faible. La variante 200' illustrée en figure 3 permet de transmettre des ondes optiques sur une plus grande longueur de matériau à changement de phase que dans le cas du commutateur 200 des figures 2A et 2B. La longueur de matériau à changement de phase est considérée le long de l'axe Oy, entre les électrodes de conduction 101A et 101B. Dans le cas de la variante 200', la puissance optique est par exemple supérieure à celle mise en œuvre dans le cas du commutateur 200 pour que le matériau à changement de phase de la région 107 atteigne sa température de fusion ou de cristallisation.

À titre de variante, la portion 111T peut présenter une forme fuselée. Dans ce cas, la portion 111T présente une largeur décroissante le long de l'axe Ox et permet de concentrer l'énergie lumineuse sous le matériau à changement de phase à faire commuter. Cela permet avantageusement de réduire le niveau d'intensité lumineuse nécessaire à la commutation.

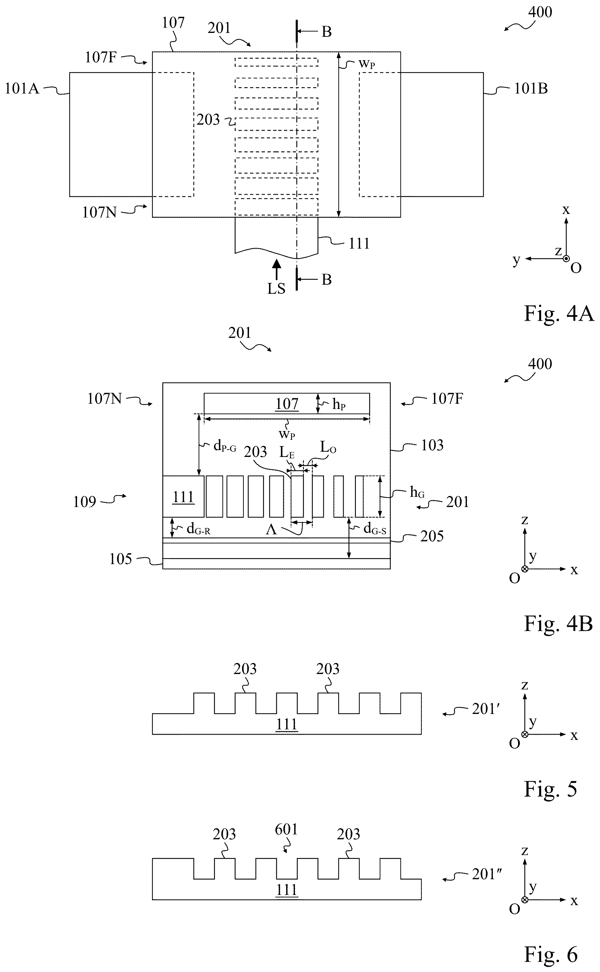

La figure 4A et la figure 4B sont des vues schématiques et partielles, respectivement de dessus et en coupe selon le plan BB de la figure 4A, d'un commutateur 400 à base d'un matériau à changement de phase selon un mode de réalisation.

Le commutateur 400 des figures 4A et 4B comprend des éléments communs avec le commutateur 200 des figures 2A et 2B. Ces éléments communs ne seront pas détaillés à nouveau ci-après. Le commutateur 400 des figures 4A et 4B diffère du commutateur 200 des figures 2A et 2B en ce que le réseau de couplage 201 du commutateur 400 est apodisé.

Dans l'exemple représenté, le réseau de couplage 201 du commutateur 400 présente une période $\Lambda$ sensiblement constante et un facteur de remplissage F variable. Le facteur de remplissage F est plus précisément décroissant le long de la direction de propagation du signal de commande dans le réseau de couplage 201 du commutateur 400, c'est-à-dire le long de la direction Ox, dans l'exemple représenté. Dit autrement, le facteur de remplissage F est plus grand au voisinage de la partie 107N de la région 107 en matériau à changement de phase qu'au voisinage de la partie 107F. Dans cet exemple, la largeur $L_E$ des régions 203 diminue le long de la direction Ox et la largeur $L_O$ des parties de la couche isolante 103 s'étendant latéralement entre les régions 203 augmente le long de la direction de propagation du signal de commande. Cela permet au réseau de couplage 201 d'irradier une puissance optique plus faible au voisinage de la partie 107N de la région 107 en matériau à changement de phase qu'au voisinage de la partie 107F.

Un avantage du commutateur 400 exposé ci-dessus en relation avec les figures 4A et 4B tient au fait que la présence du réseau de couplage 201 apodisé permet de faire en sorte que le signal laser de commande du commutateur 400 soit absorbé de façon sensiblement uniforme par le matériau à changement de phase de la région 107. Plus précisément, dans le cas du commutateur 400, le mode transverse électrique TE est plus faiblement absorbé à l'aplomb de la partie 107N de la région 107 et plus fortement absorbé à l'aplomb de la partie 107F de la région 107. Cela permet d'éviter, par rapport au commutateur 100 des figures 1A et 1B, qu'une partie de la région 107 en matériau à changement de phase, par exemple la partie 107F la plus éloignée de la source laser LS, ne change pas de phase lors de la commande du commutateur.

L'intégration du commutateur 400 décrit précédemment s'avère par exemple particulièrement avantageuse dans des dispositifs électroniques de communication radiofréquence. En effet, pour ce type d'application, il est très intéressant de disposer de commutateurs dont la largeur $w_P$ est grande, par exemple de l'ordre de quelques dizaines de micromètres, dans la mesure où cela permet de réduire les pertes résistives à l'état passant par rapport au cas de commutateurs dont la largeur $w_P$ est plus faible. En outre, l'intégration du commutateur 400 permet de limiter l'apparition de phénomènes de capacité parasite et de commuter des signaux électriques plus intenses. Toutefois, cet exemple n'est pas limitatif, et la personne du métier peut bien entendu tirer profit des avantages du commutateur 400 dans de nombreuses applications autres que les applications de communication radiofréquence.

Les figures 4A et 4B illustrent un exemple de réalisation du commutateur 400 dans lequel les régions 203 du réseau de couplage 201 sont réparties régulièrement, à pas constant, à l'aplomb de la région 107 en matériau à changement de phase. Cet exemple n'est toutefois pas limitatif et la personne du métier est capable de prévoir, à titre de variante, d'autres structures de réseau de couplage 201, destinées à permettre au réseau de couplage 201 d'irradier une puissance optique constante le long de la direction de propagation du signal de commande provenant de la source laser LS. Ces structures sont à la portée de la personne du métier à la lecture de la présente description. À titre d'exemple, la personne du métier est capable de prévoir que le réseau de couplage présente un facteur de remplissage F constant et une période $\Lambda$ croissante le long de la direction de propagation du signal de commande.

La figure 5 est une vue en coupe, schématique et partielle, d'un réseau de couplage selon un mode de réalisation. La figure 5 illustre par exemple une variante de réalisation 201' du réseau de couplage 201 du commutateur 200 des figures 2A et 2B, étant entendu que la personne du métier est capable, à la lecture de la présente description, d'adapter cette variante au réseau de couplage 201 de la variante 200' de la figure 3 et à celui du commutateur 400 des figures 4A et 4B.

Dans l'exemple représenté, les régions 203 du réseau de couplage 201' forment saillie depuis la face supérieure de la région centrale 111 du guide d'ondes 109. Les régions 203 présentent par exemple une forme de créneau.

La figure 6 est une vue en coupe, schématique et partielle, d'un réseau de couplage selon un mode de réalisation. La figure 6 illustre par exemple une variante de réalisation 201" du réseau de couplage 201 du commutateur 200 des figures 2A et 2B, étant entendu que la personne du métier est capable, à la lecture de la présente description, d'adapter cette variante au réseau de couplage 201 de la variante 200' de la figure 3 et à celui du commutateur 400 des figures 4A et 4B.

Dans l'exemple représenté, les régions 203 du réseau de couplage 201" délimitent latéralement des tranchées s'étendant, depuis la face supérieure de la région centrale 111 du guide d'ondes, dans l'épaisseur de la région 111. Les régions 203 présentent par exemple une forme de créneau.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la variante 200' de la figure 3 est combinable avec le mode de réalisation des figures 4A et 4B, c'est-à-dire que la personne du métier est par exemple capable de prévoir, dans le commutateur 400, que la partie centrale 111 du guide d'ondes 109 présente une partie fuselée 111T s'évasant le long de la direction de propagation du signal de commande du commutateur 400.

Enfin, la mise en œuvre pratique des modes de réalisation et variantes décrits est à la portée de la personne du métier à partir des indications fonctionnelles données ci-dessus. Bien que les figures 2A, 2B, 3, 4A et 4B illustrent des exemples de réalisation de commutateurs 200, 200' et 400 dans lesquels le réseau de couplage 201 est interposé verticalement entre le substrat de support 105 et la région 107 en matériau à changement de phase, cet exemple n'est pas limitatif et les commutateurs 200, 200' et 400 peuvent, à titre de variante, présenter une structure dans laquelle la région 107 en matériau à changement de phase est interposée verticalement entre le substrat de support 105 et le réseau de couplage 201. Dans cette variante, la couche réfléchissante 205 est par exemple formée du côté d'une face du réseau de couplage 201 opposée au substrat de support 105.

Par ailleurs, les modes de réalisation décrits ne se limitent pas aux exemples particuliers de matériaux et de dimensions mentionnés dans la présente description.

**Revendications**

1.  Commutateur (200 ; 200' ; 400) à base d'un matériau à changement de phase, comprenant :

    - une région (107) en ledit matériau à changement de phase reliant des première (101A) et deuxième (101B) électrodes de conduction du commutateur ; et
    - un réseau de couplage (201 ; 201' ; 201") d'un signal laser d'activation du commutateur, situé en vis-à-vis d'une face de la région (107) en ledit matériau à changement de phase et séparé de la région (107) en ledit matériau à changement de phase par une distance ($d_{P-G}$) comprise dans une plage allant de 100 à 300 nm,

    dans lequel le réseau de couplage (201 ; 201' ; 201") comprend, à l'aplomb de la région (107) en ledit matériau à changement de phase, une alternance de premières régions (203) en un premier matériau présentant un premier indice optique et de deuxièmes régions (103) en un deuxième matériau présentant un deuxième indice optique strictement inférieur au premier indice optique.

2.  Commutateur (400) selon la revendication 1, dans lequel le réseau de couplage (201 ; 201' ; 201") est configuré pour irradier une puissance optique constante le long d'une direction (Ox) de propagation du signal laser d'activation du commutateur.

3.  Commutateur (400) selon la revendication 2, dans lequel les premières régions (203) sont réparties à pas constant et présentent une largeur ($L_E$) décroissante le long de la direction (Ox) de propagation du signal laser d'activation du commutateur.

4.  Commutateur (200 ; 200') selon la revendication 1, dans lequel le réseau de couplage (201 ; 201' ; 201") est configuré pour irradier une puissance optique décroissante le long d'une direction (Ox) de propagation du signal laser d'activation du commutateur, les premières régions (203) étant réparties à pas constant et présentant une largeur ($L_E$) constante.

5.  Commutateur (200 ; 200' ; 400) selon l'une quelconque des revendications 1 à 4, dans lequel le réseau de couplage (201 ; 201' ; 201") est situé dans le prolongement d'un guide d'ondes (109), le guide d'ondes (109) comprenant une région centrale (111) en ledit premier matériau entourée d'une région périphérique (103) en ledit deuxième matériau.

6.  Commutateur (200 ; 200' ; 400) selon la revendication 5, dans lequel le premier matériau est le nitrure de silicium et le deuxième matériau est l'oxyde de silicium.

7. Commutateur (200' ; 400) selon la revendication 5 ou 6, dans lequel une partie (111T) de la région centrale (111) du guide d'ondes présente :

- une forme fuselée se rétrécissant au voisinage de la région (107) en ledit matériau à changement de phase ; ou
- une forme évasée s'élargissant au voisinage de la région (107) en ledit matériau à changement de phase.

8. Commutateur (200 ; 200' ; 400) selon l'une quelconque des revendications 1 à 7, comprenant en outre un substrat de support (105), le réseau de couplage (201 ; 201' ; 201") étant interposé entre le substrat de support (105) et la région (107) en ledit matériau à changement de phase.

9. Commutateur (200 ; 200' ; 400) selon la revendication 8, comprenant en outre une couche réfléchissante (205) interposée entre le substrat de support (105) et le réseau de couplage (201 ; 201' ; 201").

10. Commutateur (200 ; 200' ; 400) selon la revendication 9, dans lequel la couche réfléchissante (205) est en silicium ou en nitrure de silicium.

11. Commutateur (200 ; 200' ; 400) selon l'une quelconque des revendications 1 à 10, dans lequel le réseau de couplage (201 ; 201' ; 201") est séparé de la couche (107) en ledit matériau à changement de phase par une distance supérieure à 100 nm.

12. Commutateur (200 ; 200' ; 400) selon l'une quelconque des revendications 1 à 11, dans lequel la région (107) en ledit matériau à changement de phase présente une largeur ($w_P$) comprise dans une plage allant de 1 à 100 $\mu$m, de préférence de 10 à 100 $\mu$m, plus préférentiellement de 30 à 100 $\mu$m.

13. Commutateur (200 ; 200' ; 400) selon l'une quelconque des revendications 1 à 12, dans lequel les première (101A) et deuxième (101B) électrodes de conduction font partie d'un élément d'antenne d'une cellule de réseau transmetteur ou de réseau réflecteur.

14. Commutateur (200 ; 200' ; 400) selon l'une quelconque des revendications 1 à 13, dans lequel ledit matériau à changement de phase est :

- un matériau chalcogénure, de préférence le tellurure de germanium, le tellurure d'antimoine ou le germanium4-antimoine-tellure ; ou
- le dioxyde de vanadium.

Fig. 1A

Fig. 1B

Fig. 1C

Fig. 2A

Fig. 2B

Fig. 3

Fig. 4A

Fig. 4B

Fig. 5

Fig. 6

| Europäisches Patentamt European Patent Office Office européen des brevets | **RAPPORT DE RECHERCHE EUROPEENNE** | Numéro de la demande EP 25 22 4854 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2024/122083 A1 (CLEMENTE ANTONIO [FR] ET AL) 11 avril 2024 (2024-04-11) * abrégé; revendications 1,2,3,4; figures 6,7,8 * * alinéas [0074], [0076], [0079], [0084] * ----- | 1-14 | INV. G02F1/015 G02F1/31 H01S5/18 |
| A | US 2021/333575 A1 (HU JUEJUN [US] ET AL) 28 octobre 2021 (2021-10-28) * abrégé; revendication 22; figures 14a,14b * * alinéas [0099], [0100] * ----- | 1-14 | |
| A | CN 118 900 624 A (NAT UNIV DEFENSE TECHNOLOGY PLA) 5 novembre 2024 (2024-11-05) * abrégé; figures 1,3,4 * ----- | 1-14 | |
| A | CN 119 009 674 A (UNIV SHENZHEN TECHNOLOGY) 22 novembre 2024 (2024-11-22) * abrégé; revendication 1; figures 3,4 * ----- | 1-14 | DOMAINES TECHNIQUES RECHERCHES (IPC) G02F H01S |

Le présent rapport a été établi pour toutes les revendications

| Lieu de la recherche | Date d'achèvement de la recherche | Examinateur |
|---|---|---|
| La Haye | 23 février 2026 | Beugin, Anne |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

# EP 4 764 675 A1

## ANNEXE AU RAPPORT DE RECHERCHE EUROPEENNE
## RELATIF A LA DEMANDE DE BREVET EUROPEEN NO.

EP 25 22 4854

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-02-2026

| Document brevet cité au rapport de recherche | Date de publication | Membre(s) de la famille de brevet(s) | Date de publication |
|---|---|---|---|
| US 2024122083 A1 | 11-04-2024 | EP 4350890 A1 | 10-04-2024 |
| | | FR 3140713 A1 | 12-04-2024 |
| | | US 2024122083 A1 | 11-04-2024 |
| US 2021333575 A1 | 28-10-2021 | US 2021333575 A1 | 28-10-2021 |
| | | WO 2021216196 A1 | 28-10-2021 |
| CN 118900624 A | 05-11-2024 | AUCUN | |
| CN 119009674 A | 22-11-2024 | AUCUN | |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. CRUNTEANU et al.** Optical Switching of GeTe Phase Change Materials for High-Frequency Applications. *IEEE MTT-S International Microwave Workshop Series on Advanced Materials and Processes for RF and THz Applications (IMWS-AMP)*, 2017